# FASCICULE DE BREVET EUROPEEN

(11) **EP 3 208 731 B1**
(45) Date de publication et mention de la délivrance du brevet: **28.04.2021**
(21) Numéro de dépôt: 17159649.7
(22) Date de dépôt: 07.03.2017
(51) Int. Cl.: G06F 21/32, G06Q 40/02, G06Q 20/10, G06Q 20/40, G07F 7/10, G06Q 20/34

(54) **PROCEDE ET DISPOSITIF DE PARAMETRAGE D'UN DISPOSITIF POUR EFFECTUER DES OPERATIONS BANCAIRES**
KONFIGURATIONSPROZESS UND KONFIGURATIONSGERÄT FÜR EIN GERÄT, DAS BANKTRANSAKTIONEN DURCHFÜHRT
CONFIGURATION PROCESS AND CONFIGURATION DEVICE FOR A DEVICE THAT CARRIES OUT BAKING TRANSACTIONS

(30) Priorité: 17.02.2016 FR 1651276
(43) Date de publication de la demande: 23.08.2017
(73) Titulaire: Idemia Identity & Security France, 92400 Courbevoie (FR)
(72) Inventeur: GESLAIN, Raphaël, 92130 Issy Les Moulineaux (FR); DAILLE-LEFEVRE, David, 92130 Issy Les Moulineaux (FR); PEPIN, Cyrille, 92130 Issy Les Moulineaux (FR)
(74) Mandataire: Cabinet Le Guen Maillet

(56) Documents cités:
- WO-A1-2010/022129
- WO-A1-2013/183061
- FR-A1- 3 011 111

## Description

La présente invention concerne un procédé et un dispositif de paramétrage d'un dispositif pour effectuer des opérations bancaires dans lesquels les données biométriques de l'utilisateur du dispositif pour effectuer des opérations bancaires sont utilisées pour authentifier l'utilisateur du dispositif pour effectuer des opérations bancaires.

Aujourd'hui, dans le domaine des éléments sécurisés, il est possible de permettre le stockage puis la vérification de données biométriques à des fins d'authentification permettant l'ouverture de droits divers, notamment dans le domaine du passage de frontières.

Les données biométriques sont par exemple au moins une empreinte digitale et/ou des données représentatives de caractéristiques faciales et/ou de reconnaissance d'iris et/ou d'empreinte vocale.

Cependant, il n'existe pas à l'heure actuelle de moyen mis en œuvre au sein d'un élément sécurisé afin de permettre de telles opérations biométriques à des fins de transactions ou opérations bancaires, en particulier il n'existe pas de moyen d'authentification biométriques qui soit par ailleurs pleinement compatible aux standards appliqués aux cartes de paiement tel que le standard EMV.

EMV est un standard international pour les cartes de débit ou de crédit à puce initié par le consortium EMVCo. Il apporte un niveau de sécurité beaucoup plus élevé par rapport aux cartes à piste, et s'inspire largement de la carte à puce originelle.

Aujourd'hui, les méthodes d'authentification du porteur d'un dispositif pour effectuer des opérations bancaires, tel qu'une carte bancaire, sont basées sur un système de code confidentiel. En cas de perte ou bien de vol de la carte, lorsqu'un tiers a su obtenir le code confidentiel de la carte bancaire, celui-ci peut à loisir se substituer au détenteur original du moyen de paiement.

Le porteur ou utilisateur original, par exemple pour le cas d'une carte bancaire, est le client auquel la banque délivre la carte après sa personnalisation ainsi qu'un code confidentiel tel qu'un code PIN.

Le code confidentiel contient de quatre à douze chiffres, est personnalisé dans les données liées à l'application présente au sein de la carte à puce et est communiqué à l'utilisateur de ladite carte à puce afin de s'authentifier auprès de la carte.

Les tiers ont toujours une chance sur le nombre total de combinaisons différentes de codes de trouver le bon par hasard, soit une chance sur dix mille lorsque le PIN est composé de quatre chiffres Document WO 2010/022129 est considéré comme étant un art antérieur pertinent à la présente invention.

La présente invention est définie par les revendications indépendantes 1, 9 et 11 et a pour but de résoudre les inconvénients de l'art antérieur en proposant un procédé et un dispositif pour effectuer des opérations bancaires qui garantissent à son utilisateur que lui seul sera capable de s'authentifier auprès du dispositif pour effectuer des opérations bancaires afin d'autoriser une transaction bancaire. De plus, la présente invention vise à introduire, à un dispositif pour effectuer des opérations bancaires, des moyens d'authentification biométriques qui restent compatibles aux standards du secteur, en particulier le standard EMV.

A cette fin, selon un premier aspect, l'invention propose un procédé de paramétrage et d'utilisation d'un dispositif pour effectuer des opérations bancaires dans lequel des données biométriques de l'utilisateur du dispositif pour effectuer des opérations bancaires sont utilisées pour authentifier l'utilisateur du dispositif pour effectuer des opérations bancaires, caractérisé en ce que le procédé comporte les étapes de :
- activation d'une pluralité de commandes à partir d'identifiants d'un standard relatif à des transactions bancaires disponibles pour effectuer des commandes non prédéfinies par le standard,
- création, à partir d'un identifiant du standard relatif à des transactions bancaires disponible pour effectuer des commandes non prédéfinies par le standard, dans le dispositif pour effectuer des opérations bancaires d'un conteneur apte à mémoriser des données biométriques de référence d'un utilisateur du dispositif pour effectuer des opérations bancaires,
- mémorisation de données biométriques de référence, à partir d'un identifiant du standard relatif à des transactions bancaires disponible pour effectuer des commandes non prédéfinies par le standard, dans le conteneur de données biométriques de référence de l'utilisateur du dispositif pour effectuer des opérations bancaires,

La présente invention concerne aussi un dispositif pour effectuer des opérations bancaires dans lequel des données biométriques du détenteur du dispositif pour effectuer des opérations bancaires sont utilisées pour authentifier l'utilisateur du dispositif pour effectuer des opérations bancaires, caractérisé en ce que le dispositif comporte :
- des moyens d'activation d'une pluralité de commandes à partir d'identifiants d'un standard relatif à des transactions bancaires disponibles pour effectuer des commandes non prédéfinies par le standard,
- des moyens de création, à partir d'un identifiant du standard relatif à des transactions bancaires disponible pour effectuer des commandes non prédéfinies par le standard, dans le dispositif pour effectuer des opérations bancaires d'un conteneur apte à mémoriser des données biométriques de référence d'un utilisateur du dispositif pour effectuer des opérations bancaires,
- des moyens de mémorisation de données biométriques de référence, à partir d'un identifiant du standard relatif à des transactions bancaires disponible pour effectuer des commandes non prédéfinies par le standard, dans le conteneur de données biométriques de référence de l'utilisateur du dispositif pour effectuer des opérations bancaires.

Ainsi, l'authentification de l'utilisateur du dispositif pour effectuer des opérations bancaires afin d'autoriser une transaction bancaire est plus fiable.

De plus, le dispositif pour effectuer des opérations bancaires selon la présente invention reste compatible aux standards du secteur, en particulier au standard EMV.

Selon un mode particulier de l'invention, le procédé comporte en outre, préalablement aux étapes d'activation, de création et de mémorisation, l'étape d'activation ou non dans le dispositif pour effectuer des opérations bancaires de la fonctionnalité données biométriques pour authentifier l'utilisateur du dispositif pour effectuer des opérations bancaires.

Ainsi, la conception du dispositif pour effectuer des opérations bancaires permet d'utiliser celui-ci dans un système classique d'authentification avec un code confidentiel ou dans un système dans lequel la présente invention est implémentée.

Selon un mode particulier de l'invention, le procédé comporte en outre les étapes de :
- réception de données biométriques candidates pour une opération bancaire,
- comparaison des données biométriques candidates avec les données biométriques de référence,
- autorisation ou rejet de la transaction bancaire en fonction de la comparaison.

Selon un mode particulier de l'invention, le procédé comporte en outre l'étape de mémorisation dans le dispositif pour effectuer des opérations bancaires d'instructions aptes à traiter au moins une des commandes suivantes : vérification de données biométriques sans chiffrement, vérification de données biométriques avec chiffrement, déblocage d'un compteur d'erreur, lecture d'un compteur d'erreur.

Ainsi, l'authentification de l'utilisateur du dispositif peut être réalisée suivant différentes méthodes au choix de l'émetteur du dispositif, et un compteur d'erreur peut être adjoint au conteneur afin de suivre l'évolution du nombre de données biométriques candidates erronées comparées aux données biométriques de référence.

Selon un mode particulier de l'invention, le procédé comporte en outre l'étape de mémorisation dans le dispositif pour effectuer des opérations bancaires d'instructions aptes à traiter l'enregistrement de données biométriques postérieurement à la fourniture du dispositif pour effectuer des opérations bancaires à son utilisateur.

Ainsi, il est possible pour l'utilisateur, avec le dispositif pour effectuer des opérations bancaires en sa possession, d'enregistrer les données biométriques de son choix au sein du dispositif pour effectuer des opérations bancaires, et ce dans un environnement sécurisé.

Selon un mode particulier de l'invention, en cas de rejet de la transaction bancaire, le procédé comporte en outre l'étape d'incrémentation d'un compteur de rejet.

Ainsi, il est possible selon ce mode particulier de l'invention de suivre l'évolution du nombre de données biométriques candidates erronées comparées aux données biométriques de référence.

Selon un mode particulier de l'invention, le procédé comporte en outre les étapes de comparaison de la valeur du compteur de rejet à une valeur prédéterminée et, si la valeur du compteur de rejet est égale à la valeur prédéterminée, de sélection d'un autre mode d'authentification de l'utilisateur du dispositif, et le cas échéant, de rejet de toute opération bancaire tant qu'une mise à jour du compteur de rejet n'est pas effectuée.

Ainsi, la correcte utilisation du dispositif pour effectuer des opérations bancaires répondant à ce mode particulier de l'invention est conditionnée à la présentation de données biométriques candidates valides, et la présentation d'une valeur limite prédéterminée de données candidates invalides bloque cette méthode d'authentification du porteur du dispositif pour effectuer des opérations bancaires.

Selon un mode particulier de l'invention, lorsque le compteur de rejet est mis à jour, le procédé comporte en outre l'étape de mise à jour dans le conteneur de nouvelles données biométriques de référence de l'utilisateur du dispositif pour effectuer des opérations bancaires.

Ainsi, il est possible de réintroduire des données biométriques de référence au sein d'un environnement sécurisé, afin de permettre au détenteur du dispositif de stocker des données biométriques qui lui permettent de s'authentifier, si d'aventure les données biométriques de référence précédentes ont été incorrectement capturées.

Selon un mode particulier de l'invention, si la fonctionnalité n'est pas activée, le procédé comporte les étapes de :
- réception d'un code d'authentification candidat pour une opération bancaire,
- comparaison du code d'authentification candidat avec un code de référence mémorisé dans le dispositif pour effectuer des opérations bancaires,
- autorisation ou rejet de la transaction bancaire en fonction de la comparaison du code d'authentification candidat avec le code de référence.

Ainsi, si la fonctionnalité n'est pas activée au sein du dispositif pour effectuer des opérations bancaires, ledit dispositif pour effectuer des opérations bancaires est en adéquation avec les standards régissant l'environnement technologique dudit dispositif pour effectuer des opérations bancaires.

Selon un mode particulier de l'invention, le dispositif pour effectuer des opérations bancaires est une carte à puce ou est compris dans un téléphone mobile.

Ainsi, l'utilisateur de ladite carte à puce est capable de s'authentifier auprès de ladite carte à puce lors de chaque transaction bancaire à l'aide de sa donnée biométrique candidate.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de paramétrage et/ou d'utilisation d'un dispositif pour effectuer des opérations bancaires dans lequel les données biométriques du détenteur du dispositif pour effectuer des opérations bancaires sont utilisées pour autoriser ou rejeter un paiement selon la présente invention ;
la Fig. 2 représente un exemple d'architecture d'un dispositif pour effectuer des opérations bancaires selon la présente invention ;
la Fig. 3 représente un exemple d'architecture d'un dispositif de paramétrage d'un dispositif pour effectuer des opérations bancaires selon la présente invention ;
la Fig. 4 représente un exemple de modules logiciels implémentés dans le dispositif pour effectuer des opérations bancaires selon la présente invention ;
la Fig. 5 représente un exemple d'algorithme exécuté par un dispositif de paramétrage d'un dispositif pour effectuer des opérations bancaires selon un premier mode de réalisation de la présente invention ;
la Fig. 6 représente un exemple d'algorithme exécuté par un dispositif de paramétrage d'un dispositif pour effectuer des opérations bancaires selon un second mode de réalisation de la présente invention ;
la Fig. 7a représente un exemple d'algorithme exécuté par un dispositif de paramétrage d'un dispositif pour effectuer des opérations bancaires selon le second mode de réalisation de la présente invention ;
la Fig. 7b représente un exemple d'algorithme exécuté par un dispositif de paramétrage d'un dispositif pour effectuer des opérations bancaires selon la présente invention ;
la Fig. 8 représente un exemple d'algorithme exécuté par un dispositif pour effectuer des opérations bancaires selon la présente invention.

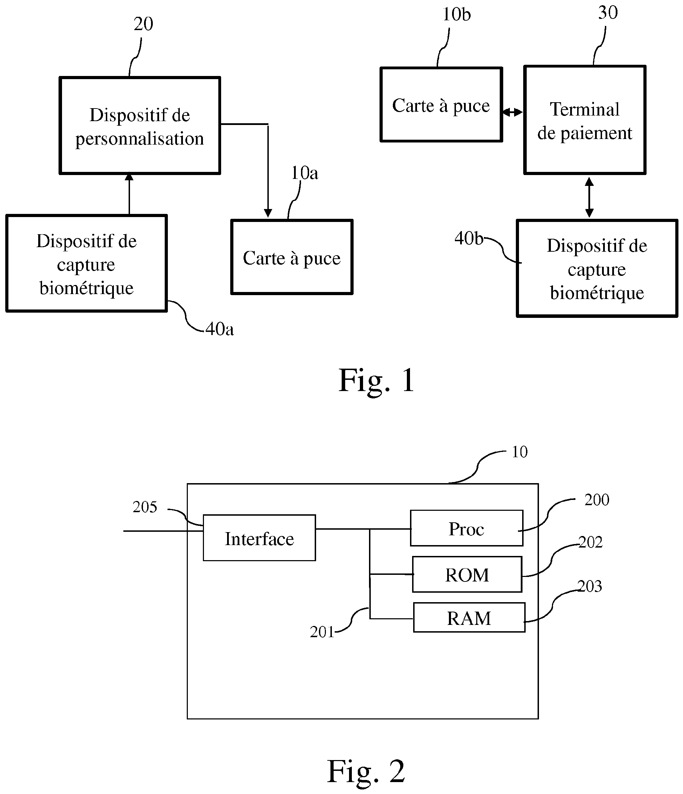

La **Fig. 1** représente un système de paramétrage et/ou d'utilisation d'un dispositif pour effectuer des opérations bancaires dans lequel les données biométriques du détenteur du dispositif pour effectuer des opérations bancaires sont utilisées pour autoriser ou rejeter un paiement selon la présente invention.

Le système de paramétrage et/ou d'utilisation d'un dispositif pour effectuer des opérations bancaires 10a ou 10b dans lequel les données biométriques du détenteur ou utilisateur du dispositif pour effectuer des opérations bancaires sont utilisées comporte au moins un dispositif de personnalisation 20, des dispositifs pour effectuer des opérations bancaires 10a, 10b, des dispositifs de capture de données biométriques 40 du détenteur du dispositif pour effectuer des opérations bancaires 10, des terminaux de paiements 30 et/ou des bornes de retrait de numéraire ou de réalisation d'opérations bancaires non représentées en Fig. 1.

Le dispositif de personnalisation 20 est par exemple compris, selon un premier mode de réalisation de la présente invention, dans un établissement bancaire ou un établissement de fourniture de dispositifs pour effectuer des opérations bancaires 10.

Le dispositif de personnalisation 20 est par exemple placé, selon un second mode de réalisation de la présente invention, au guichet d'agences bancaires d'un établissement bancaire.

Les dispositifs de capture de données biométriques 40a et 40b sont par exemple placés, selon la présente invention, au guichet d'agences bancaires pour le dispositif de capture de données biométriques 40a ou par exemple dans un point de vente pour le dispositif de capture de données biométriques 40b.

Selon la présente invention, le dispositif pour effectuer des opérations bancaires 10 comporte :
- des moyens d'activation d'une pluralité de commandes à partir d'identifiants d'un standard relatif à des transactions bancaires disponible pour effectuer des commandes non prédéfinies par le standard,
- des moyens de création, à partir d'un identifiant du standard relatif à des transactions bancaires disponible pour effectuer des commandes non prédéfinies par le standard, dans le dispositif pour effectuer des opérations bancaires d'un conteneur apte à mémoriser des données biométriques de référence d'un utilisateur du dispositif pour effectuer des opérations bancaires,
- des moyens de mémorisation de données biométriques de référence, à partir d'un identifiant du standard relatif à des transactions bancaires disponible pour effectuer des commandes non prédéfinies par le standard, dans le conteneur de données biométriques de référence de l'utilisateur du dispositif pour effectuer des opérations bancaires.

La **Fig. 2** représente un exemple d'architecture d'un dispositif pour effectuer des opérations bancaires selon la présente invention.

Le dispositif pour effectuer des opérations bancaires 10 comprend :
- un processeur, micro-processeur, ou microcontrôleur 200 ;
- une mémoire volatile 203 ;
- une mémoire non volatile 202;
- une interface 205 ;
- un bus de communication reliant le processeur 200 à la mémoire ROM 203, à la mémoire RAM 203 et à l'interface 205.

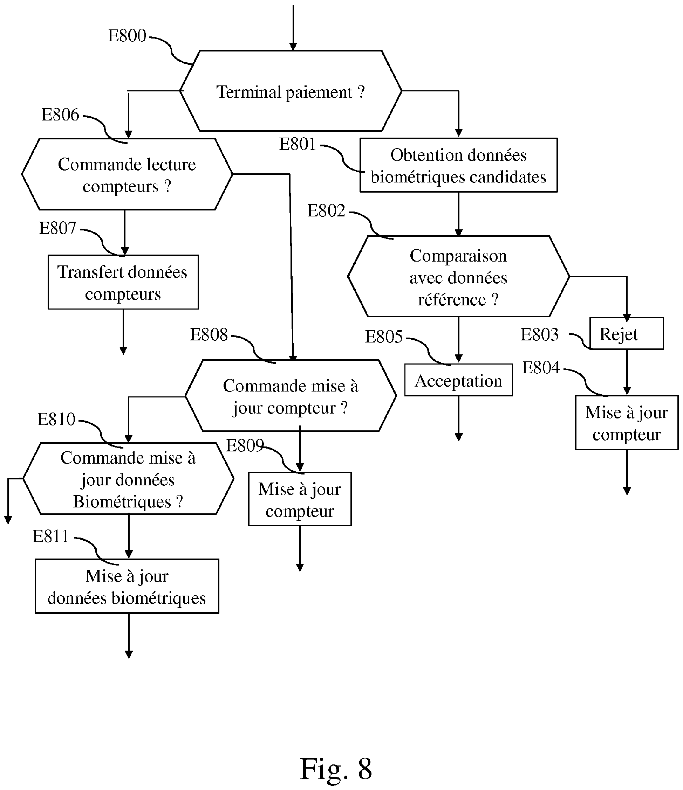

Le processeur 200 est capable d'exécuter des instructions chargées dans la mémoire volatile 203 à partir de la mémoire non volatile 202. Lorsque le dispositif pour effectuer des opérations bancaires 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 8.

Tout ou partie du procédé décrit en relation avec la Fig. 8 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

L'interface 205 est apte à communiquer avec un dispositif de personnalisation 20 et/ou un terminal de paiement 30.

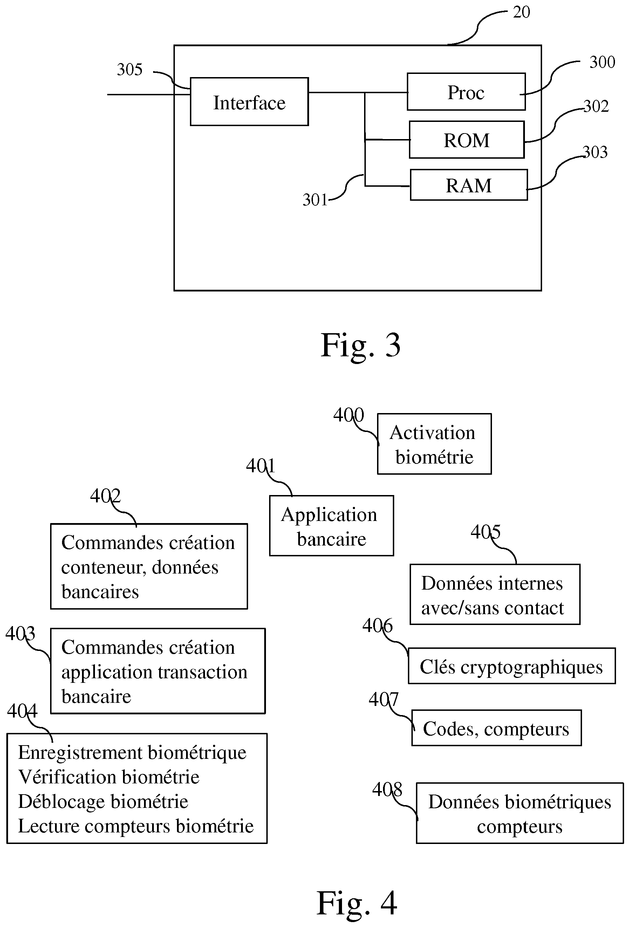

La **Fig. 3** représente un exemple d'architecture d'un dispositif de paramétrage d'un dispositif pour effectuer des opérations bancaires selon la présente invention.

Le dispositif de paramétrage 20 d'un dispositif pour effectuer des opérations bancaires comprend :
- un processeur, micro-processeur, ou microcontrôleur 300 ;
- une mémoire volatile 303 ;
- une mémoire non volatile 302;
- une interface 305 ;
- un bus de communication reliant le processeur 300 à la mémoire ROM 303, à la mémoire RAM 303 et à l'interface 305.

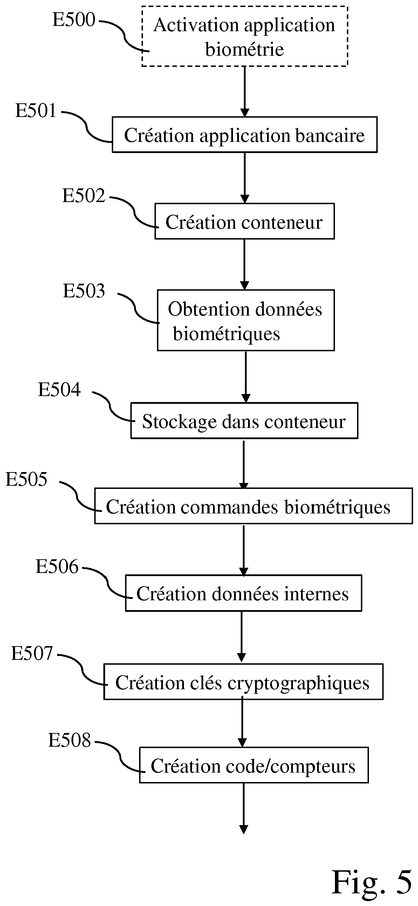

Le processeur 300 est capable d'exécuter des instructions chargées dans la mémoire volatile 303 à partir de la mémoire non volatile 302. Lorsque le dispositif de paramétrage 20 est mis sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec les Figs. 5, 6 et 7.

Tout ou partie du procédé décrit en relation avec les Figs. 5, 6 et 7 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

L'interface 305 est apte à communiquer avec un dispositif pour effectuer des opérations bancaires 10.

La **Fig. 4** représente un exemple de modules logiciels implémentés dans le dispositif pour effectuer des opérations bancaires selon la présente invention.

Le dispositif pour effectuer des opérations bancaires 10 comporte un module d'activation de la fonction biométrique 400 qui est, selon la présente invention, utilisée pour autoriser ou rejeter une transaction bancaire.

Lors de la création de l'application d'authentification du porteur par au moins la vérification de données biométriques, le module d'activation de la fonction biométrique 400 met un paramètre spécifique ayant la valeur '1' qui permet d'activer l'ensemble de la solution mise en œuvre par la présente invention. Si ce paramètre est positionné à la valeur nulle, alors le dispositif pour effectuer des opérations bancaires se comporte strictement comme un dispositif pour effectuer des opérations bancaires classiques avec une authentification par code.

Lorsque le paramètre est positionné à '1', alors la fonctionnalité d'authentification par données biométriques est activée et il est alors possible de paramétrer l'application d'authentification du porteur par au moins la vérification de données biométriques.

Le dispositif pour effectuer des opérations bancaires 10 comporte un module d'application bancaire 401. Le module d'application bancaire 401 est créé au sein du dispositif pour effectuer des opérations bancaires avec une certaine configuration qui permet au code exécutable correspondant de pouvoir être utilisé.

Le dispositif pour effectuer des opérations bancaires 10 comporte un module 402 permettant l'interprétation de commandes de création d'un conteneur ou zone mémoire pour le stockage des données biométriques de référence utilisées pour l'authentification du porteur de l'utilisateur du dispositif pour effectuer des opérations bancaires 10.

Des identifiants de données sont classiquement utilisés dans l'état de la technique lors des phases de création de la fonctionnalité transaction bancaire du dispositif pour effectuer des opérations bancaires. Classiquement, un identifiant est envoyé au dispositif pour effectuer des opérations bancaires 10 avec les données qu'il identifie. Cet identifiant est standardisé.

Classiquement, certains identifiants ou plages d'identifiants sont réservés par des standards afin d'identifier toutes les données dont la création est nécessaire au bon fonctionnement de l'application 401. Ces mêmes standards spécifient une plage d'identifiants disponibles et la présente invention utilise ces identifiants laissés disponibles, c'est-à-dire non associés à une commande prédéterminée, pour spécifier le type de commande ainsi que les données auxquelles les commandes se réfèrent.

Les identifiants utilisés par la présente invention pour implémenter la fonctionnalité authentification par données biométriques sont les identifiants du standard, tel que par exemple le standard EMV, appelés identifiants DGI, relatifs à des transactions bancaires disponibles pour effectuer des commandes non prédéfinies par le standard.

Le conteneur est par exemple créé à partir de ces identifiants.

Le dispositif pour effectuer des opérations bancaires 10 comporte un module 403 permettant l'interprétation de commandes de création de l'application bancaire. Ce module permet de créer l'arborescence de l'application bancaire, c'est-à-dire les données que l'application va utiliser lors de son fonctionnement. Ces données sont par exemple des données internes, des données de contrôle, des clés cryptographiques, un code, un compteur d'erreur de saisie d'un code et une valeur limite associée.

Le dispositif pour effectuer des opérations bancaires 10 comporte un module 404 qui comporte les différentes commandes qui peuvent être implémentées dans le dispositif pour effectuer des opérations bancaires 10. La liste des commandes qui peuvent être implémentées dans le dispositif pour effectuer des opérations bancaires 10 comporte par exemple et non limitativement les commandes suivantes : enregistrement de données biométriques après la fourniture du dispositif pour effectuer des opérations bancaires à son utilisateur, vérification de données biométriques sans chiffrement, vérification de données biométriques avec chiffrement, déblocage du compteur d'erreur, lecture du compteur d'erreur.

Le dispositif pour effectuer des opérations bancaires 10 comporte un module 405 qui comporte les données internes autorisant le dispositif pour effectuer des opérations bancaires 10 à effectuer des opérations, telles que décrites en référence au module 404, par l'intermédiaire de l'interface 205 avec ou sans contact physique avec un terminal de paiement 30.

Le dispositif pour effectuer des opérations bancaires 10 comporte un module 406 apte à gérer les différentes clés cryptographiques utilisées pour communiquer via l'interface 205.

Le dispositif pour effectuer des opérations bancaires 10 comporte un module 407 qui mémorise le code d'authentification ainsi que les différents compteurs associés.

Le dispositif pour effectuer des opérations bancaires 10 comporte un module 408 qui gère la mémorisation dans un conteneur biométrique créé des données biométriques.

La **Fig. 5** représente un exemple d'algorithme exécuté par un dispositif de paramétrage d'un dispositif pour effectuer des opérations bancaires selon un premier mode de réalisation de la présente invention.

Le présent algorithme est décrit dans un exemple où il est exécuté par le processeur 300 du dispositif de paramétrage d'un dispositif pour effectuer des opérations bancaires.

A l'étape E500, le processeur 300 active le module d'activation de la fonction biométrie 400 utilisée pour autoriser ou rejeter une transaction bancaire.

Le processeur 300 met le paramètre spécifique à la valeur '1' et permet ainsi d'activer l'ensemble de la solution mise en œuvre par la présente invention et permet l'activation du module 501.

Il est à remarquer ici que dans un mode particulier de la présente invention, l'étape E500 n'est pas exécutée, l'activation du module 501 étant automatique.

A l'étape E501, le processeur 300 active le module d'application bancaire 401 ainsi que le module 402. Le module d'application bancaire 401 est créé au sein du dispositif pour effectuer des opérations bancaires avec une certaine configuration qui permet au code exécutable correspondant de pouvoir être utilisé.

A l'étape E502, le processeur 300 active le module 403 permettant la création d'un conteneur pour le stockage des données biométriques de référence utilisées pour l'authentification du porteur du dispositif pour effectuer des opérations bancaires 10.

A l'étape suivante E503, le processeur 300 obtient d'une base de données biométriques, ou directement d'un dispositif de capture biométrique 40a, les données biométriques du futur détenteur ou utilisateur du dispositif pour effectuer des opérations bancaires 10. Les données biométriques ont par exemple été communiquées par le détenteur par l'intermédiaire d'un réseau de télécommunication ou par l'intermédiaire d'une agence bancaire de l'établissement bancaire.

A l'étape E504, le processeur 300 commande la mémorisation des données biométriques du futur détenteur du dispositif pour effectuer des opérations bancaires 10 dans le conteneur créé à l'étape E502.

Les étapes E503 et E504, constituent une opération communément appelée enrôlement.

A l'étape E505, le processeur 300 active le module 404 qui comporte les différentes commandes qui peuvent être implémentées dans le dispositif pour effectuer des opérations bancaires 10. Le processeur 300 active ou non les différentes commandes suivantes : vérification de données biométriques sans chiffrement, vérification de données biométriques avec chiffrement, déblocage du compteur d'erreur, lecture du compteur d'erreur.

Dans un mode particulier de réalisation de la présente invention, la commande enregistrement de données biométriques après la fourniture du dispositif pour effectuer des opérations bancaires à son détenteur est aussi activée.

A l'étape E506, le processeur 300 active le module 403 qui permet l'interprétation de commandes de création de l'application bancaire. Ce module permet de créer l'arborescence de l'application bancaire, c'est-à-dire les données que l'application va utiliser lors de son fonctionnement. Ces données sont par exemple des données internes, des clés cryptographiques, un code, un compteur d'erreur de saisie du code et une valeur limite associée. A la même étape, le processeur 300 active le module 405 qui comporte les données internes autorisant le dispositif pour effectuer des opérations bancaires 10 à effectuer des opérations par l'intermédiaire de l'interface 205 avec ou sans contact physique avec un terminal de paiement 30.

A l'étape E507, le processeur 300 active le module 406 qui est apte à gérer les différentes clés cryptographiques utilisées pour communiquer via l'interface 205.

A l'étape E508, le processeur 300 active le module 407 qui mémorise le code d'authentification ainsi que les différents compteurs associés.

Ces opérations effectuées, le dispositif pour effectuer des opérations bancaires 10 est prêt à être envoyé à son futur détenteur pour une utilisation immédiate.

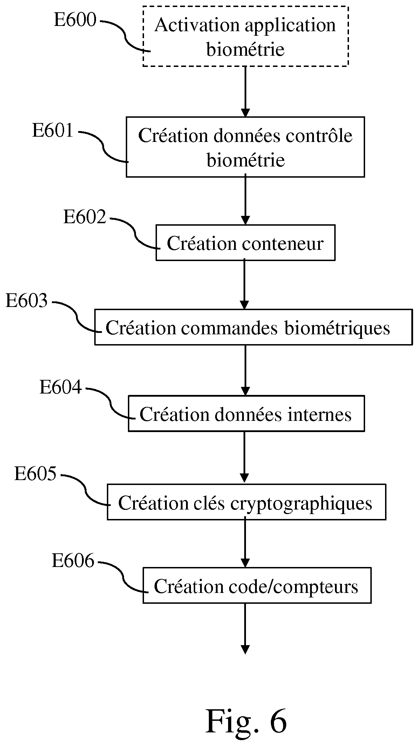

La **Fig. 6** représente un exemple d'algorithme exécuté par un dispositif de paramétrage d'un dispositif pour effectuer des opérations bancaires selon un second mode de réalisation de la présente invention.

Le présent algorithme est décrit dans un exemple où il est exécuté par le processeur 300 du dispositif de paramétrage d'un dispositif pour effectuer des opérations bancaires.

A l'étape E600, le processeur 300 active le module d'activation de la fonction biométrie 400 utilisée pour autoriser ou rejeter une transaction bancaire.

Le processeur 300 met le paramètre spécifique à la valeur '1' et permet ainsi d'activer l'ensemble de la solution mise en œuvre par la présente invention et permet l'activation du module 501.

Il est à remarquer ici que dans un mode particulier de la présente invention, l'étape E500 n'est pas exécutée, l'activation du module 501 étant automatique.

A l'étape E601, le processeur 300 active le module d'application bancaire 401 ainsi que le module 402. Le module d'application bancaire 401 est créé au sein du dispositif pour effectuer des opérations bancaires avec une certaine configuration qui permet au code exécutable correspondant de pouvoir être utilisé.

A l'étape E602, le processeur 300 active le module 403 permettant la création d'un conteneur pour le stockage des données biométriques de référence utilisées pour l'authentification du porteur du dispositif pour effectuer des opérations bancaires 10.

A l'étape E603, le processeur 300 active le module 404 qui comporte les différentes commandes qui peuvent être implémentées dans le dispositif pour effectuer des opérations bancaires 10. Le processeur 300, à partir de données internes de contrôle, active ou non les différentes commandes suivantes : enregistrement de données biométriques après la fourniture du dispositif pour effectuer des opérations bancaires à son détenteur, vérification de données biométriques sans chiffrement, vérification de données biométriques avec chiffrement, déblocage du compteur d'erreur, lecture du compteur d'erreur.

A l'étape E604, le processeur 300 active le module 403 qui permet l'interprétation de commandes de création de l'application bancaire. Ce module permet de créer l'arborescence de l'application bancaire, c'est-à-dire les données que l'application va utiliser lors de son fonctionnement. Ces données sont par exemple des données internes, des clés cryptographiques, un code, un compteur d'erreur de saisie du code et une valeur limite associée. A la même étape, le processeur 300 active le module 405 qui comporte les données internes autorisant le dispositif pour effectuer des opérations bancaires 10 d'effectuer des opérations par l'intermédiaire de l'interface 205 avec ou sans contact physique avec un terminal de paiement 30.

A l'étape E605, le processeur 300 active le module 406 qui est apte à gérer les différentes clés cryptographiques utilisées pour communiquer via l'interface 205.

A l'étape E606, le processeur 300 active le module 407 qui mémorise le code d'authentification ainsi que les différents compteurs associés.

Ces opérations effectuées, le dispositif pour effectuer des opérations bancaires 10 est prêt à être envoyé au futur détenteur de celle-ci. Le détenteur, s'il veut utiliser le dispositif pour effectuer des opérations bancaires doit se rendre dans une agence bancaire afin de pouvoir procéder à un relevé de ses données biométriques ou fournit ses données biométriques afin que celles-ci soient mémorisées dans le dispositif pour effectuer des opérations bancaires 10.

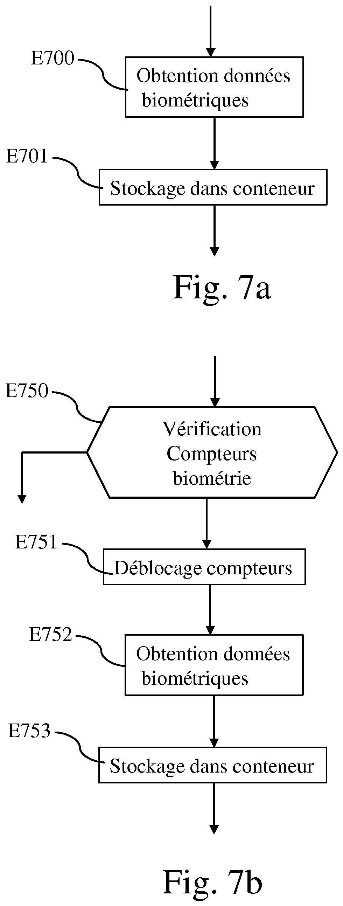

La **Fig. 7a** représente un exemple d'algorithme exécuté par un dispositif de paramétrage d'un dispositif pour effectuer des opérations bancaires selon le second mode de réalisation de la présente invention.

Le présent algorithme est décrit dans un exemple où il est exécuté par le processeur 300 du dispositif de paramétrage d'un dispositif pour effectuer des opérations bancaires placé dans une agence bancaire.

A l'étape suivante E700, le processeur 300 obtient les données biométriques du futur détenteur du dispositif pour effectuer des opérations bancaires 10 par l'intermédiaire d'un dispositif de capture de données biométriques par exemple lors de la personnalisation de la carte.

A l'étape E701, le processeur 300 commande la mémorisation des données biométriques du futur détenteur du dispositif pour effectuer des opérations bancaires 10 dans le conteneur créé à l'étape E602 de l'algorithme de la Fig. 6.

Les étapes E700 et E701 constituent une opération communément appelée enrôlement.

La **Fig. 7b** représente un exemple d'algorithme exécuté par un dispositif de paramétrage d'un dispositif pour effectuer des opérations bancaires selon la présente invention.

Le présent algorithme est décrit dans un exemple où il est exécuté par le processeur 300 du dispositif de paramétrage d'un dispositif pour effectuer des opérations bancaires.

A l'étape E750, le processeur 300 commande la lecture des compteurs représentatifs des différents rejets de transaction bancaire liés à une mauvaise comparaison entre les données biométriques de référence stockées dans le dispositif pour effectuer des opérations bancaires et des données candidates.

Si les compteurs ont une valeur inférieure à une valeur maximale, le processeur 300 interrompt le présent algorithme.

Si les compteurs ont une valeur supérieure ou égale à la valeur maximale, le processeur 300 passe à l'étape E751.

A l'étape E751, le processeur 300 commande le déblocage des compteurs lus en mettant ceux-ci à une valeur nulle et interrompt le présent algorithme.

Dans un mode particulier de réalisation, si la fréquence de déblocage des compteurs est importante, par exemple, une périodicité mensuelle, le processeur 300 passe de l'étape E751 à E752.

A l'étape suivante E752, le processeur 300 obtient les données biométriques du futur détenteur du dispositif pour effectuer des opérations bancaires 10 par l'intermédiaire d'un dispositif de capture de données biométriques.

A l'étape E753, le processeur 300 commande la mémorisation des données biométriques obtenues à l'étape E752 dans le conteneur créé à l'étape E602 de l'algorithme de la Fig. 6 à la place des données biométriques antérieurement stockées.

La **Fig. 8** représente un exemple d'algorithme exécuté par un dispositif pour effectuer des opérations bancaires selon la présente invention.

Le présent algorithme est décrit dans un exemple où il est exécuté par le processeur 200 du dispositif pour effectuer des opérations bancaires 10.

A l'étape E800, le processeur 200 vérifie si le dispositif pour effectuer des opérations bancaires 10 reçoit une commande d'un terminal de paiement 30.

Dans l'affirmative, le processeur 200 passe à l'étape E801. Dans la négative, le processeur 200 passe à l'étape E806.

A l'étape E801, le processeur 200 reçoit les données biométriques candidates prises par un dispositif de capture de données biométriques associé au terminal de paiement auquel le dispositif pour effectuer des opérations bancaires 10 est connecté.

A l'étape suivante E802, le processeur 200 compare les données biométriques candidates aux données de référence stockées dans le conteneur du dispositif pour effectuer des opérations bancaires 10.

Si la comparaison des données biométriques candidates aux données de référence stockées dans le conteneur du dispositif pour effectuer des opérations bancaires 10 est positive, le processeur 200 passe à l'étape E805. Dans la négative, le processeur 200 passe à l'étape E803.

A l'étape E803, le processeur 200 rejette la transaction bancaire.

A l'étape suivante E804, le processeur 200 incrémente les compteurs représentatifs des différents rejets de transaction bancaire liés à une mauvaise comparaison entre les données biométriques de référence stockées dans le dispositif pour effectuer des opérations bancaires et des données candidates.

Cette opération effectuée, le processeur 200 retourne à l'étape E800.

Si les compteurs ont une valeur supérieure ou égale à la valeur maximale, le processeur 300 bloque la possibilité d'effectuer des transactions bancaires par l'intermédiaire du dispositif pour effectuer des opérations bancaires 10.

Dans un mode particulier de la présente invention, si les compteurs ont une valeur supérieure ou égale à la valeur maximale, le processeur 300 sélectionne un autre mode d'authentification de l'utilisateur du dispositif, et le cas échéant, de rejet de toute opération bancaire tant qu'une mise à jour du compteur de rejet n'est pas effectuée.

A l'étape E805, le processeur 200 accepte la transaction bancaire.

Cette opération effectuée, le processeur 200 retourne à l'étape E800.

A l'étape E806, le processeur 200 vérifie si une commande de lecture des compteurs représentatifs des différents rejets de transaction bancaire liés à une mauvaise comparaison entre les données biométriques de référence stockées dans le dispositif pour effectuer des opérations bancaires et des données candidates est reçue.

Dans l'affirmative, le processeur 200 passe à l'étape E806. Dans la négative le processeur passe à l'étape E808.

A l'étape E807, les compteurs représentatifs des différents rejets de transaction bancaire liés à une mauvaise comparaison entre les données biométriques de référence stockées dans le dispositif pour effectuer des opérations bancaires et des données candidates sont lus.

Cette opération effectuée, le processeur 200 retourne à l'étape E800.

A l'étape E808, le processeur 200 vérifie si une commande de mise à jour des compteurs représentatifs des différents rejets de transaction bancaire liés à une mauvaise comparaison entre les données biométriques de référence stockées dans le dispositif pour effectuer des opérations bancaires et des données candidates est reçue.

Si une commande de mise à jour des compteurs représentatifs des différents rejets de transaction bancaire liés à une mauvaise comparaison entre les données biométriques de référence stockées dans le dispositif pour effectuer des opérations bancaires et des données candidates est reçue, le processeur 200 passe à l'étape E809. Dans la négative, le processeur 200 passe à l'étape E810.

A l'étape E809, les compteurs représentatifs des différents rejets de transaction bancaire liés à une mauvaise comparaison entre les données biométriques de référence stockées dans le dispositif pour effectuer des opérations bancaires et des données candidates sont mis à jour.

Cette opération effectuée, le processor 200 retourne à l'étape E800.

A l'étape E810, le processeur 200 vérifie si une commande de mise à jour des données biométriques de référence stockées dans le dispositif pour effectuer des opérations bancaires et des données candidates est reçue.

Si une commande de mise à jour des données biométriques de référence stockées dans le dispositif pour effectuer des opérations bancaires et des données candidates est reçue, le processeur 200 passe à l'étape E811. Dans la négative, le processor 200 retourne à l'étape E800.

A l'étape E811, de nouvelles données biométriques sont mémorisées dans le conteneur.

Cette opération effectuée, le processor 200 retourne à l'étape E800.

Bien entendu, la présente invention n'est nullement limitée aux modes de réalisation décrits ici, mais englobe, bien au contraire, toute variante à la portée de l'homme du métier.

## Revendications

1. Procédé de paramétrage d'un dispositif pour effectuer des opérations bancaires dans lequel des données biométriques du détenteur du dispositif pour effectuer des opérations bancaires sont utilisées pour authentifier l'utilisateur du dispositif pour effectuer des opérations bancaires, **caractérisé en ce que** le procédé comporte les étapes, effectuées lors du paramétrage du dispositif pour effectuer des opérations bancaires, de :
- activation ou non dans le dispositif pour effectuer des opérations bancaires d'une
fonctionnalité données biométriques pour authentifier l'utilisateur du dispositif pour effectuer des opérations bancaires,
- activation d'une pluralité de commandes à partir d'identifiants d'un standard relatif à des transactions bancaires disponibles pour effectuer des commandes non prédéfinies par le standard,
- création (E502), à partir d'un identifiant du standard relatif à des transactions bancaires disponible pour effectuer des commandes non prédéfinies par le standard, dans le dispositif pour effectuer des opérations bancaires d'un conteneur apte à mémoriser des données biométriques de référence d'un utilisateur du dispositif pour effectuer des opérations bancaires,
- mémorisation (E504) de données biométriques de référence, à partir d'un identifiant du standard relatif à des transactions bancaires disponible pour effectuer des commandes non prédéfinies par le standard, dans le conteneur de données biométriques de référence de l'utilisateur du dispositif pour effectuer des opérations bancaires.

2. Procédé selon la revendication 1, **caractérisé en ce que** le procédé comporte en outre les étapes de :
- réception de données biométriques candidates pour une opération bancaire,
- comparaison des données biométriques candidates avec les données biométriques de référence,
- autorisation ou rejet de l'opération bancaire en fonction de la comparaison.

3. Procédé selon l'une quelconque des revendications 1 à 2, **caractérisé en ce que** le procédé comporte en outre l'étape de mémorisation dans le dispositif pour effectuer des opérations bancaires d'instructions aptes à traiter au moins une des commandes suivantes : vérification de données biométriques sans chiffrement, vérification de données biométriques avec chiffrement, déblocage d'un compteur d'erreur, lecture d'un compteur d'erreur.

4. Procédé selon l'une quelconque des revendications 1 à 2, **caractérisé en ce que** le procédé comporte en outre l'étape de mémorisation dans le dispositif pour effectuer des opérations bancaires d'instructions aptes à traiter l'enregistrement de données biométriques postérieurement à la fourniture du dispositif pour effectuer des opérations bancaires à son utilisateur.

5. Procédé selon l'une quelconque des revendications précédentes, **caractérisé en ce que**, en cas de rejet de l'opération bancaire, le procédé comporte en outre l'étape d'incrémentation d'un compteur de rejet.

6. Procédé selon la revendication 5, **caractérisé en ce que** le procédé comporte en outre les étapes de comparaison de la valeur du compteur de rejet à une valeur prédéterminée et, si la valeur du compteur de rejet est égale à la valeur prédéterminée, de sélection d'un autre mode d'authentification de l'utilisateur du dispositif, et le cas échéant, de rejet de toute opération bancaire tant qu'une mise à jour du compteur de rejet n'est pas effectuée.

7. Procédé selon la revendication 5, **caractérisé en ce que** lorsque le compteur de rejet est mis à jour, le procédé comportant en outre l'étape de mise à jour dans le conteneur de nouvelles données biométriques de référence de l'utilisateur du dispositif pour effectuer des opérations bancaires.

8. Procédé selon l'une quelconque des revendications précédentes **caractérisé en ce que** si la fonctionnalité données biométriques n'est pas activée, le procédé comporte les étapes de :
- réception d'un code d'authentification candidat pour une opération bancaire,
- comparaison du code d'authentification candidat avec un code de référence mémorisé dans le dispositif pour effectuer des opérations bancaires,
- autorisation ou rejet de l'opération bancaire en fonction de la comparaison du code d'authentification candidat avec le code de référence.

9. Dispositif pour effectuer des opérations bancaires dans lequel des données biométriques du détenteur du dispositif pour effectuer des opérations bancaires sont utilisées pour authentifier l'utilisateur du dispositif pour effectuer des transactions bancaires, **caractérisé en ce que** le dispositif comporte :
- des moyens d'activation activation ou non dans le dispositif pour effectuer des opérations bancaires d'une fonctionnalité données biométriques pour authentifier l'utilisateur du dispositif pour effectuer des opérations bancaires,
- des moyens d'activation lors du paramétrage du dispositif pour effectuer des opérations bancaires d'une pluralité de commandes à partir d'identifiants d'un standard relatif à des transactions bancaires disponibles pour effectuer des commandes non prédéfinies par le standard,
- des moyens de création, activés lors du paramétrage du dispositif pour effectuer des opérations bancaires, à partir d'un identifiant du standard relatif à des transactions bancaires disponible pour effectuer des commandes non prédéfinies par le standard, dans le dispositif pour effectuer des opérations bancaires d'un conteneur apte à mémoriser des données biométriques de référence d'un utilisateur du dispositif pour effectuer des opérations bancaires,
- des moyens de mémorisation, activés lors du paramétrage du dispositif pour effectuer des opérations bancaires, de données biométriques de référence, à partir d'un identifiant du standard relatif à des transactions bancaires disponible pour effectuer des commandes non prédéfinies par le standard, dans le conteneur de données biométriques de référence de l'utilisateur du dispositif pour effectuer des opérations bancaires.

10. Carte à puce **caractérisée en ce qu'**elle comporte le dispositif pour effectuer des opérations bancaires selon la revendication 9.

11. Programme d'ordinateur stocké sur un support d'informations, ledit programme comportant des instructions permettant de mettre en œuvre le procédé selon l'une quelconque des revendications 1 à 8, lorsqu'il est chargé et exécuté par un système informatique.

## Patentansprüche

1. Konfigurationsprozess für ein Gerät zum Durchführen von Bankoperationen, wobei biometrische Daten des Inhabers des Geräts zum Durchführen von Bankoperationen verwendet werden, um den Benutzer des Geräts zum Durchführen von Bankoperationen zu authentifizieren, **dadurch gekennzeichnet, dass** der Prozess die folgenden Schritte umfasst, die während der Konfiguration des Geräts zum Durchführen von Bankoperationen durchgeführt werden:
- Aktivieren oder Nichtaktivieren, in dem Gerät zum Durchführen von Bankoperationen, einer Funktionalität für biometrische Daten, um den Benutzer des Geräts zum Durchführen von Bankoperationen zu authentifizieren,
- Aktivieren einer Vielzahl von Befehlen anhand von Kennungen eines Standards für Banktransaktionen, die zum Durchführen von nicht durch den Standard vordefinierten Befehlen verfügbar sind,
- Erstellen (E502), anhand einer Kennung des Standards für Banktransaktionen, die zum Durchführen von nicht durch den Standard vordefinierten Befehlen verfügbar ist, eines Behälters in dem Gerät zum Durchführen von Bankoperationen, der dazu fähig ist, biometrische Referenzdaten eines Benutzers des Geräts zum Durchführen von Bankoperationen zu speichern,
- Speichern (E504), anhand einer Kennung des Standards für Banktransaktionen, die zum Durchführen von nicht durch den Standard vordefinierten Befehlen verfügbar ist, von biometrischen Referenzdaten in dem Behälter für biometrische Referenzdaten des Benutzers des Geräts zum Durchführen von Bankoperationen.

2. Prozess nach Anspruch 1, **dadurch gekennzeichnet, dass** der Prozess ferner die folgenden Schritte umfasst:
- Empfangen von potentiellen biometrischen Daten für eine Bankoperation,
- Vergleichen der potentiellen biometrischen Daten mit den biometrischen Referenzdaten,
- Zulassen oder Ablehnen der Bankoperation in Abhängigkeit von dem Vergleich.

3. Prozess nach einem der Ansprüche 1 bis 2, **dadurch gekennzeichnet, dass** der Prozess ferner den Schritt des Speicherns, in dem Gerät zum Durchführen von Bankoperationen, von Anweisungen beinhaltet, die fähig sind, mindestens einen der folgenden Befehle zu verarbeiten: Überprüfen von biometrischen Daten ohne Verschlüsselung, Überprüfen von biometrischen Daten mit Verschlüsselung, Entsperren eines Fehlerzählers, Auslesen eines Fehlerzählers.

4. Prozess nach einem der Ansprüche 1 bis 2, **dadurch gekennzeichnet, dass** der Prozess ferner den Schritt des Speicherns, in dem Gerät zum Durchführen von Bankoperationen, von Anweisungen umfasst, die fähig sind, nach der Auslieferung des Geräts zum Durchführen von Bankoperationen an seinen Benutzer die Erfassung von biometrischen Daten zu verarbeiten.

5. Prozess nach einem der vorhergehenden Ansprüche, **dadurch gekennzeichnet, dass** im Fall einer Ablehnung der Bankoperation der Prozess ferner den Schritt des Inkrementierens eines Ablehnungszählers umfasst.

6. Prozess nach Anspruch 5, **dadurch gekennzeichnet, dass** der Prozess ferner die Schritte des Vergleichens des Werts des Ablehnungszählers mit einem vorgegebenen Wert und, wenn der Wert des Ablehnungszählers gleich dem vorgegebenen Wert ist, des Auswählens eines anderen Verfahrens zum Authentifizieren des Benutzers des Geräts und gegebenenfalls des Ablehnens jeglicher Bankoperation, solange eine Aktualisierung des Ablehnungszählers nicht durchgeführt wird, umfasst.

7. Prozess nach Anspruch 5, **dadurch gekennzeichnet, dass**, wenn der Ablehnungszähler aktualisiert wird, der Prozess ferner den Schritt des Aktualisierens, in dem Behälter, von neuen biometrischen Referenzdaten des Benutzers des Geräts zum Durchführen von Bankoperationen umfasst.

8. Prozess nach einem der vorhergehenden Ansprüche, **dadurch gekennzeichnet, dass**, wenn die Funktionalität für biometrische Daten nicht aktiviert ist, der Prozess die folgenden Schritte umfasst:
- Empfangen eines potentiellen Authentifizierungscodes für eine Bankoperation,
- Vergleichen des potentiellen Authentifizierungscodes mit einem in dem Gerät zum Durchführen von Bankoperationen gespeicherten Referenzcode,
- Zulassen oder Ablehnen der Bankoperation in Abhängigkeit von dem Vergleich des potentiellen Authentifizierungscodes mit dem Referenzcode.

9. Gerät zum Durchführen von Bankoperationen, wobei biometrische Daten des Inhabers des Geräts zum Durchführen von Bankoperationen verwendet werden, um den Benutzer des Geräts zum Durchführen von Bankoperationen zu authentifizieren, **dadurch gekennzeichnet, dass** das Gerät Folgendes umfasst:
- Mittel zum Aktivieren oder Nichtaktivieren, in dem Gerät zum Durchführen von Bankoperationen, einer Funktionalität für biometrische Daten, um den Benutzer des Geräts zum Durchführen von Bankoperationen zu authentifizieren,
- Mittel zum Aktivieren, während der Konfiguration des Geräts zum Durchführen von Bankoperationen, einer Vielzahl von Befehlen anhand von Kennungen eines Standards für Banktransaktionen, die zum Durchführen von nicht durch den Standard vordefinierten Befehlen verfügbar sind,
- Mittel, die während der Konfiguration des Geräts zum Durchführen von Bankoperationen aktiviert sind, zum Erstellen, anhand einer Kennung des Standards für Banktransaktionen, die zum Durchführen von nicht durch den Standard vordefinierten Befehlen verfügbar ist, eines Behälters in dem Gerät zum Durchführen von Bankoperationen, der dazu fähig ist, biometrische Referenzdaten eines Benutzers des Geräts zum Durchführen von Bankoperationen zu speichern,
- Mittel, die während der Konfiguration des Geräts zum Durchführen von Bankoperationen aktiviert sind, zum Speichern, anhand einer Kennung des Standards für Banktransaktionen, die zum Durchführen von nicht in dem Standard vordefinierten Befehlen verfügbar ist, von biometrischen Referenzdaten in dem Behälter für biometrische Referenzdaten des Benutzers des Geräts zum Durchführen von Bankoperationen.

10. Chipkarte, **dadurch gekennzeichnet, dass** sie das Gerät zum Durchführen von Bankoperationen nach Anspruch 9 umfasst.

11. Computerprogramm, das auf einem Informationsträger gespeichert ist, wobei das Programm Anweisungen, die das Umsetzen des Prozesses nach einem der Ansprüche 1 bis 8 gestatten, umfasst, wenn es von einem Rechnersystem geladen und ausgeführt wird.

## Claims

1. Method for configuring a device for carrying out banking operations, wherein biometric data of the owner of the device for carrying out banking operations are used to authenticate the user of the device for carrying out banking operations, **characterized in that** the method includes the steps, carried out while configuring the device for carrying out banking operations, of:
- activating or not activating, in the device for carrying out banking operations, a biometric data functionality for authenticating the user of the device for carrying out banking operations,
- activating a plurality of commands on the basis of identifiers of a standard relating to banking transactions which are available for carrying out commands not predefined by the standard,
- creating (E502), on the basis of an identifier of the standard relating to banking transactions which is available for carrying out commands not predefined by the standard, in the device for carrying out banking operations, a container able to store reference biometric data of a user of the device for carrying out banking operations,
- storing (E504) reference biometric data, on the basis of an identifier of the standard relating to banking transactions which is available for carrying out commands not predefined by the standard, in the container for reference biometric data of the user of the device for carrying out banking operations.

2. Method according to Claim 1, **characterized in that** the method further includes the steps of:
- receiving candidate biometric data for a banking operation,
- comparing the candidate biometric data with the reference biometric data,
- authorizing or rejecting the banking operation depending on the comparison.

3. Method according to either one of Claims 1 and 2, **characterized in that** the method further includes the step of storing, in the device for carrying out banking operations, instructions able to process at least one of the following commands: checking unencrypted biometric data, checking encrypted biometric data, unblocking an error counter, reading an error counter.

4. Method according to either one of Claims 1 and 2, **characterized in that** the method further includes the step of storing, in the device for carrying out banking operations, instructions able to process the saving of biometric data after the provision of the device for carrying out banking operations to its user.

5. Method according to any one of the preceding claims, **characterized in that**, in the event of rejection of the banking operation, the method further includes the step of incrementing a rejection counter.

6. Method according to Claim 5, **characterized in that** the method further includes the steps of comparing the value of the rejection counter with a predetermined value and, if the value of the rejection counter is equal to the predetermined value, of selecting another way of authenticating the user of the device, and, where appropriate, of rejecting any banking operation until an update of the rejection counter is carried out.

7. Method according to Claim 5, **characterized in that**, when the rejection counter is updated, the method further includes the step of updating, in the container, new reference biometric data of the user of the device for carrying out banking operations.

8. Method according to any one of the preceding claims, **characterized in that**, if the biometric data functionality is not activated, the method includes the steps of:
- receiving a candidate authentication code for a banking operation,
- comparing the candidate authentication code with a reference code stored in the device for carrying out banking operations,
- authorizing or rejecting the banking operation depending on the comparison of the candidate authentication code with the reference code.

9. Device for carrying out banking operations, wherein biometric data of the owner of the device for carrying out banking operations are used for authenticating the user of the device for carrying out banking transactions, **characterized in that** the device includes:
- activation means for activating or not activating, in the device for carrying out banking operations, a biometric data functionality for authenticating the user of the device for carrying out banking operations,
- means for activating, while configuring the device for carrying out banking operations, a plurality of commands on the basis of identifiers of a standard relating to banking transactions which are available for carrying out commands not predefined by the standard,
- means, activated while configuring the device for carrying out banking operations, for creating, on the basis of an identifier of the standard relating to banking transactions which is available for carrying out commands not predefined by the standard, in the device for carrying out banking operations, a container able to store reference biometric data of a user of the device for carrying out banking operations,
- means, activated while configuring the device for carrying out banking operations, for storing reference biometric data, on the basis of an identifier of the standard relating to banking transactions which is available for carrying out commands not predefined by the standard, in the container for reference biometric data of the user of the device for carrying out banking operations.

10. Chip card **characterized in that** it includes the device for carrying out banking operations according to Claim 9.

11. Computer program stored on a data medium, said program including instructions allowing the method according to any one of Claims 1 to 8 to be implemented when it is loaded and executed by a computer system.
